# EUROPEAN PATENT SPECIFICATION

(11) **EP 2 479 598 B1**
(45) Date of publication and mention of the grant of the patent: **05.09.2018**
(21) Application number: 11000437.1
(22) Date of filing: 20.01.2011
(51) Int. Cl.: G02B 27/01

(54) **Positioning system for head-UP display**
Positionierungssystem für eine Head-up Anzeigevorrichtung
Système de positionnement pour affichage tête haute

(43) Date of publication of application: 25.07.2012
(73) Proprietor: Magna Electronics Solutions GmbH, 35578 Wetzlar (DE)
(72) Inventor: Rumpf, Horst, 35578 Wetzlar (DE); Hopf, Christian, 35578 Wetzlar (DE); Noel, Alexander, 35578 Wetzlar (DE)
(74) Representative: Ricker, Mathias

(56) References cited:
- US-A- 5 457 575
- US-A1- 2003 021 043
- US-A1- 2005 024 490
- US-A1- 2009 086 329

## Description

### 1. Field of the invention

The invention relates to a positioning system for a head-up display, and more particularly to a positioning system for moving and angle adjusting a combiner used in head-up display.

### 2. Background of the invention

A Head-Up Display (HUD) is any transparent display that presents data without requiring users to look away from their usual viewpoints. Although they were initially developed for military aviation, HUDs are now used in commercial aircraft, automobiles, and other applications. Typically, a HUD system mainly includes a combiner, a projector, and a video data source such as a computer. The combiner is a semi-transparent mirror that is positioned in front of the driver/pilot to display the virtual picture with the required information projected from the projector. In operation, the combiner can be moved between a parking position when not needed and an operating position when needed. The movement of the combiner between the parking position and the operating position is realized by means of a HUD positioning system. A second function for angular fine adjustment of the combiner is also implemented in such a positioning system for correcting the tilt angle of the combiner depending on driver's height and his eye position.

For example, US2009/0086329A1 disclosed a positioning system for a combiner in a head-up display. In this art, the combiner is moved from a protected parking position to an operating position by a screw spindle coupled to a stepping motor. The movement is guided by side walls with cams and teeth to drive a synchronous movement. It includes the possibility for angular adjustment of combiner position when reaching the operating position. However, the required space for such a positioning system including many parts for accurate movement limits the possibilities for reducing the size of the HUD system. Besides, the design does not offer the wished flexibility to follow requirements for dashboard and different windshields from car makers. Additionally, the two major functions, i.e. the combiner movement and the combiner adjustment, are strongly linked with each other so that the design of the mechanism of the combiner movement and combiner adjustment is unchangeable.

US 5 457 575 A discloses a combiner pivotally mounted for movement between an operating position in the line of sight of an operator and a storage position. A sector gear fixed to the combiner engages a slidable rack so that sliding the rack causes pivotal movement of the combiner. A control knob and stem are mounted for rotary movement and translation. A cam rotated by the knob engages followers on the rack to slide the rack upon knob translation or rotation. Knob translation effects movement of the combiner between operating and storage position, and when in operating position, knob rotation effects fine adjustment of the combiner to adjust image position.

US 2005/024490 A1 discloses a head-up display device having an excellent appearance, which has a simple structure and an excellent design upon both nonuse and use. A cover having a shape equivalent to that of an aperture formed on an upper surface of a housing is attached on an upper surface of a retractable reflector. The cover slides on the upper surface of the reflector cooperating with a retractable motion of the reflector, thereby performing the opening and closing action of the aperture. When the reflector takes its falling-down posture, the reflector and its rotation shaft can be shielded from an eye range and the number of the parting lines can be reduced.

### Summary of the invention

Accordingly, the invention provides a positioning system for a head-up display that a moving mechanism and an angle adjusting mechanism are provided as compact separate units and can be handled and optimized independent from specific application due to its modular design.

According to one aspect of the present invention, a positioning system for a head-up display is provided which comprises: a combiner carrier; a combiner rotatably disposed on the combiner carrier; a moving mechanism for moving the combiner carrier from a first position being a parking position to a second position being an operating position, and comprising a spindle rotatably disposed on the combiner carrier; an angle adjusting mechanism comprising a cam connected to the spindle and a lever, one end of which being connected to the spindle and one end of which being free and being pushed by the cam for rotating the combiner relative to the combiner carrier to adjust a tilt angle of the combiner; and a driving mechanism for alternatively driving the moving and the angle adjusting mechanism comprising a driving gear connected to the spindle, a guiding plate connected to the spindle and having a guiding pin; and a guiding slot for accommodating the guiding pin and having a straight slot and a curve slot; wherein the driving gear, the guiding plate and the cam are connected to the spindle and are rotated together with the spindle; wherein when the guiding pin is in the straight slot, the guiding plate is prohibited from rotating by the constraint between the guiding pin and the straight slot, and the driving gear drives the spindle to move the combiner carrier between the parking position and the operating position; wherein, when the guiding pin is in the curve slot, the guiding plate is allowed to rotate, and the driving gear drives the cam to rotate the combiner relative to the combiner carrier to adjust the tilt angle of the combiner.

According to another aspect of the present invention, a positioning system for a head-up display is provided which comprises: a combiner carrier; a combiner rotatably disposed on the combiner carrier; a moving mechanism for moving the combiner carrier from a parking position to an operating position; an angle adjusting mechanism for adjusting a tilt angle of the combiner; and a driving mechanism for alternatively driving the moving mechanism and the angle adjusting mechanism; the moving mechanism comprising a spindle rotatably disposed on the combiner carrier, and the driving mechanism comprises a planetary gear train having a sun gear, a planet gear and a sleeve, wherein the planet gear is engaged with the sun gear, the sun gear is disposed on the spindle, and the sleeve is rotatably disposed on the spindle and is connected to the planet gear and the angle adjusting mechanism, wherein, when the planet gear is rotated at a fixed position, the sun gear is driven to rotate by the planet gear so that the spindle is rotated together with the sun gear to drive the moving mechanism between the parking position and the operating position, wherein, when the planet gear is revolved about the sun gear, the sleeve is driven to rotate by the planet gear to drive the angle adjusting mechanism; the driving mechanism comprising: a guiding pin connected to said sleeve, and a guiding slot, for accommodating the guiding pin and having a straight slot and a curve slot; wherein, when the guiding pin is in the straight slot, the planet gear is rotated at a fixed position and drives the sun gear to rotate, wherein, wherein the guiding pin is in the curve slot, the planet gear is revolved about the sun gear, and the sun gear is prohibited to rotate; the angle adjusting mechanism comprising: a cam disposed on the sleeve and capable of rotating with the sleeve; and a lever, wherein one end of which is fixed on the combiner and the other end is a free end; wherein, when the planet gear is revolved about the sun gear, the sleeve is driven to rotate by the planet gear, and the cam is rotated together with the sleeve and pushes the free end of the lever, to adjust the tilt angle of the combiner.

### Brief Description of the invention

The present invention can be more fully understood by reference to the following description and accompanying drawings, in which:
FIG. 1 is an explosion view of a first embodiment of a positioning system for a head-up display of the present invention.
FIG. 2 is a side cross-section view of the positioning system in FIG. 1 wherein a combiner carrier is at a parking position.
FIG. 3 is a side cross-section view of the positioning system in FIG. 1 wherein the combiner carrier is at an operating position.
FIG. 4 is a side cross-section view of the positioning system in FIG. 1 wherein the tilt angle of a combiner is adjusted.
FIG. 5 is an explosion view of a second embodiment of a positioning system for a head-up display of the present invention.
FIG. 6 is an enlarged view of a moving mechanism, a driving mechanism, and an angle adjusting mechanism in the positioning system in FIG. 5.
FIG. 7 is a side cross-section view of the positioning system in FIG. 5 wherein a combiner carrier is at a parking position.
FIG. 8 is a side cross-section view of the positioning system in FIG. 5 wherein the combiner carrier is at an operating position.
FIG. 9 is a side cross-section view of the positioning system in FIG. 5 wherein the tilt angle of a combiner is adjusted.
FIG. 10 is an explosion view of a third embodiment of a positioning system for a head-up display of the present invention.
FIG. 11 is a side cross-section view of the positioning system in FIG. 10 wherein a combiner carrier is at a parking position.
FIG. 12 is a side cross-section view of the positioning system in FIG. 10 wherein the combiner carrier is at an operating position.
FIG. 13 is a side cross-section view of the positioning system in FIG. 10 wherein the tilt angle of a combiner is adjusted.
FIG. 14 is a side cross-section view of the positioning system in FIG. 10 wherein the combiner at a service position.
FIG. 15 is an explosion view of the third embodiment that is implemented in the first embodiment.

### Detailed Description of the Invention

According to the objects mentioned above, preferred embodiments are brought up to explain the technological means adopted in the present invention and the effect thereof accompanying the attached figures.

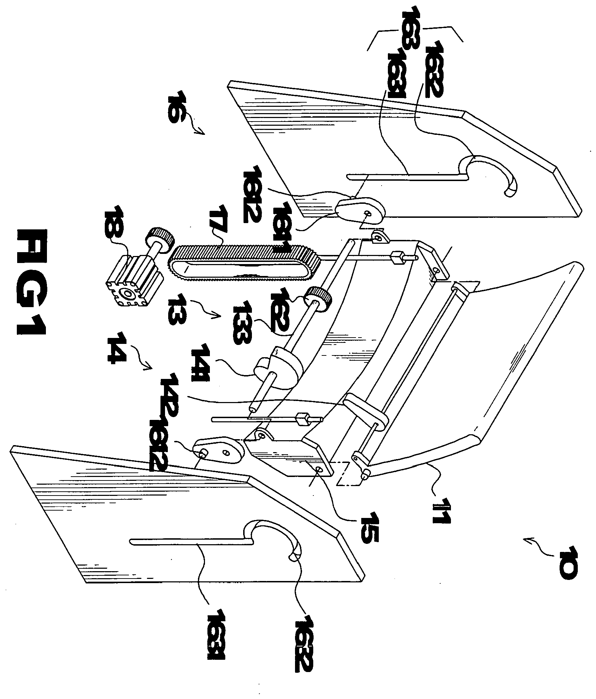

Please refer to FIG. 1. FIG. 1 illustrates a first embodiment of a positioning system for a head-up display of the present invention.

As shown in FIG. 1, the present positioning system 10 for a head-up display comprises a combiner carrier 15; a combiner 11 rotatably disposed on the combiner carrier 15; a moving mechanism 13 for moving the combiner carrier 15 between a parking position and an operating position; an angle adjusting mechanism 14 for adjusting a tilt angle of the combiner 11; and a driving mechanism 16 for alternatively driving the moving mechanism 13 and the angle adjusting mechanism 14.

The moving mechanism 13 comprises a spindle 133 which is rotatably disposed on the combiner carrier 15. The driving mechanism 16 comprises driving gear 162, a guiding slot 163 and a guiding plate 1611. The driving gear 162 and the guiding plate 1611 are disposed on the spindle 133 and are capable of rotating together with the spindle 133. The guiding plate 1611 has a guiding pin 1612 which is accommodated in the guiding slot 163. The driving gear 162 is engaged with an endless gear belt 17. The endless gear belt 17 is driven by a motor 18 and, accordingly, drives the driving gear 162 to rotate or to move. The guiding slot 163 comprises a straight slot 1631 and a curve slot 1632 for switching the motion types of the driving gear 162.

The angle adjusting mechanism 14 comprises a cam 141 and a lever 142. The cam 141 is disposed on the spindle 133 and is capable of rotating together with the spindle 133. One end of the lever 142 is fixed on the combiner 11 and the other end is a free end which is pushed by the cam 141 while the cam 141 rotates. When the cam 141 is rotated together with the spindle 133, the cam 141 pushes the free end of the lever 142 to rotate the combiner 11 for adjusting the tilt angle of the combiner 11.

When the guiding pin 1612 is in the straight slot 1631, the rotation of the guiding plate 1611, the spindle 133 and the driving gear 162 is prohibited by the constraint between the guiding pin 1612 and the straight slot 1631. In this case, when the driving gear 162 is driven by the motor 18 through the endless gear belt 17, the driving gear 162 drives the spindle 133 to move together, therefore, to move the combiner carrier 15 between the parking position and the operating position.

When the guiding pin 1612 is in the curve slot 1632, the rotation of the guiding plate 1611, the spindle 133 and the driving gear 162 is released. In this case, when the driving gear 162 is driven by the motor 18 through the endless gear belt 17, the driving gear 162 drives the cam 141 to rotate together, therefore, to adjust the tilt angle of the combiner 11.

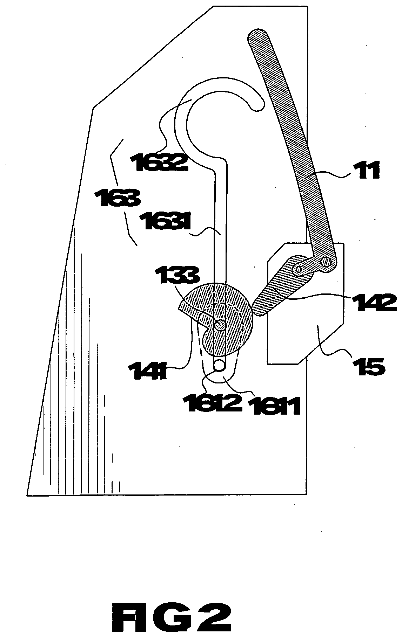

Please refer to FIG. 1 to 4. FIG. 2 to 4 are side cross-section views of the positioning system in FIG. 1 to respectively show that a combiner carrier is at a parking position, the combiner carrier is at an operating position, and the tilt angle of a combiner is adjusted.

The detailed description of the operation of the positioning system is described as follow.

Before starting to operate the positioning system 10, the combiner carrier 15 is positioned at the parking position, and the guiding pin 1612 is positioned at an end position of the straight slot 1631 as shown in FIG. 2.

At that time, the rotation of the driving gear 162 is prohibited by the constraint between the guiding pin 1612 and the straight slot 1631. When starting to operate the positioning system 10, the endless gear belt 17 is driven by the motor 18 and simultaneously drives the driving gear 162 to move.

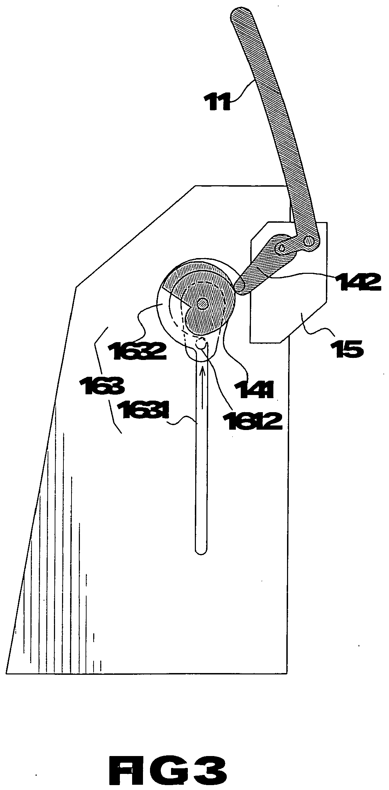

During above operation, the driving gear 162 drives the spindle 133 to move together, therefore, the combiner carrier 15 is moved from the sparking position to the operating position, and the guiding pin 1612 is moved in the straight slot 1631 from the end position to a boundary position between the straight slot 1631 and the curve slot 1632 as shown in FIG. 3.

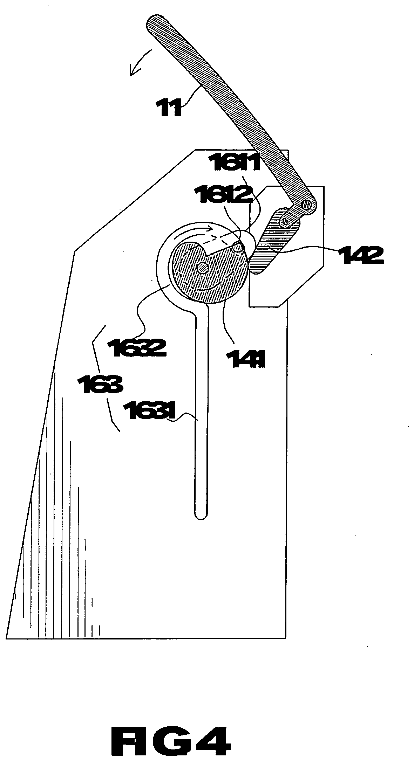

Now please refer to FIG. 3. When the combiner carrier 15 moves to the operating position, the rotation of the driving gear 162 is released because the guiding pin 1612 can move in the curve slot 1632 with the rotation of the driving gear 162. Accordingly, when the motor 18 keeps driving the driving gear 162, the cam 141 is driven to rotate together, and the cam 141 will contact and push the lever 142 as shown in FIG. 4. Due to the varying radius of the cam 141, the cam 141 pushes the lever 142 at varying distance to rotate the combiner 11, thereby, it could control the tilt angle of the combiner 11 at a suitable view angle for a viewer.

And then, if a user intends to move the combiner carrier 15 back to the parking position, the entire process is reverse by reversing the motor 18. First, the driving gear 162 is driven to reversely rotate until the guiding pin 1612 moves back to the boundary position between the straight slot 1631 and the curve slot 1632 as shown in FIG. 3. Then, the further rotation of the driving gear 162 is prohibited so that the driving gear 162 is driven to move to carry the combiner carrier 15 back to the parking position as shown in FIG. 2.

By the way, for recovering the lever 142 to its un-pushed position after releasing the pushing force from the cam 141, an elastic member such as a spring (not shown in the Figures) is provided on the lever 142 for providing an elastic force against the pushing force from the cam 141.

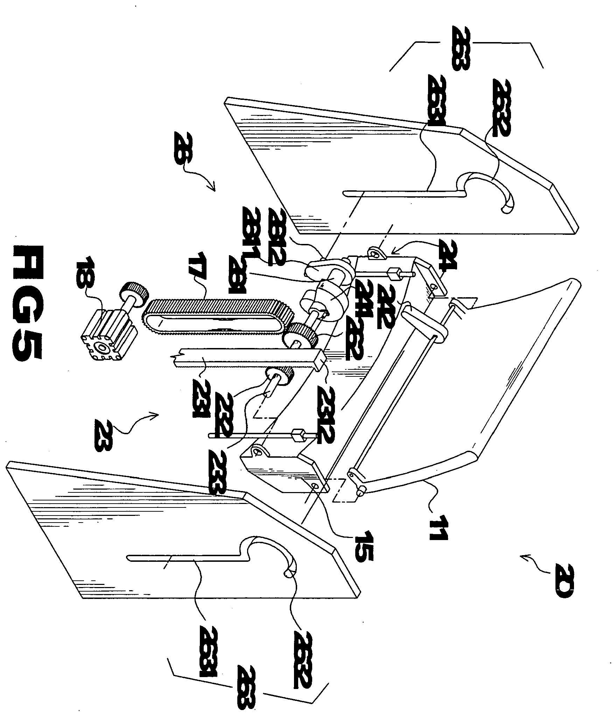

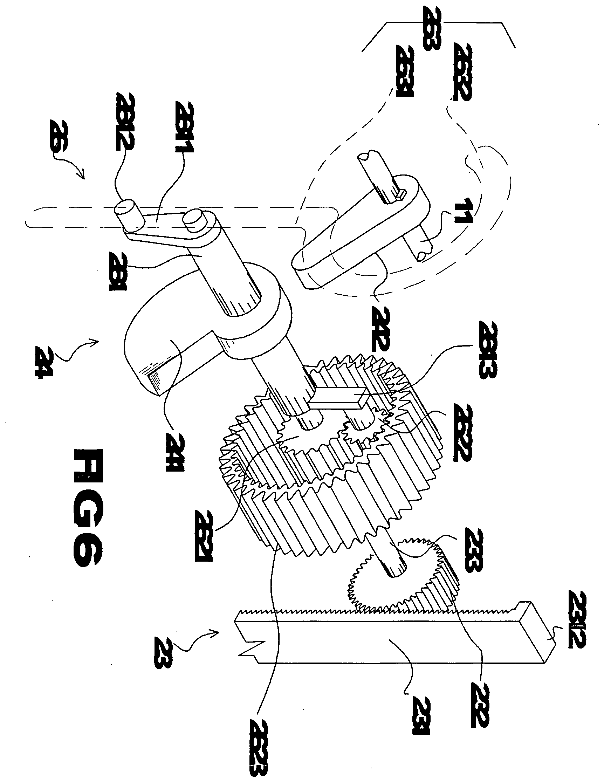

Please refer to FIG. 5 and FIG. 6. FIG. 5 illustrates a second embodiment of a positioning system for a head-up display of the present invention, and FIG. 6 is an enlarged view of a moving mechanism, a driving mechanism, and an angle adjusting mechanism in the positioning system in FIG. 5. In this embodiment, an alternative moving mechanism 23 and an alternative driving mechanism 26 are provided. The other members are the same as those illustrated in the first embodiment and are numbered with the same number.

As shown in FIG. 5, the present positioning system 20 for a head-up display comprises a combiner carrier 15; a combiner 11 rotatably disposed on the combiner carrier 15; a moving mechanism 23 for moving the combiner carrier 15 between a parking position and an operating position; an angle adjusting mechanism 24 for adjusting a tilt angle of the combiner 11; and a driving mechanism 26 for alternatively driving the moving mechanism 23 and the angle adjusting mechanism 24.

The moving mechanism 23 comprises a rack 231 which has a stopper 2312 disposed at one end of it; a spindle 233 which is rotatably disposed on the combiner carrier 15, and a gear wheel 232 which is disposed on the spindle 233 and engaged with the rack 231. When the spindle 233 is rotated, the gear wheel 232 is rotated together with the shaft 233 and relatively moved on the rack 231, therefore, to move the combiner carrier 15 between the parking position and the operating position.

The driving mechanism 26 comprises a sleeve 261, a planetary gear train 262 and a guiding slot 263. The sleeve 261 is rotatably disposed on the spindle 233 and has a guiding plate 2611 and a bulge 2613. The guiding plate 2611 has a guiding pin 2612 which is accommodated in the guiding slot 263. The planetary gear train 262 comprises a sun gear 2621, a planet gear 2622 and a ring gear 2623. The sun gear 2621 is disposed on the spindle 233 and is rotated together with the spindle 233. The ring gear 2623 is rotatably disposed on the spindle 233 and is engaged with an endless gear belt 17. The endless gear belt 17 is driven by a motor 18 and, accordingly, drives the ring gear 2623 to rotate on the spindle 233. The planet gear 2622 is rotatably connected to the bulge 2613 and is engaged with the sun gear 2621 and the ring gear 2623. The guiding slot 263 comprises a straight slot 2631 and a curve slot 2632 for switching the motion types of the planetary gear train 262.

When the ring gear 2623 is driven by the motor 18 through the endless gear belt 17 to rotate on the spindle 233, the sun gear 2621 is able to rotate while the guiding pin 2612 is in the straight slot 2631, and the sun gear 2621 is unable to rotate while the gear wheel 232 arrives at the stopper 1312.

Moreover, when the ring gear 2623 is driven by the motor 18 through the gear belt 17 to rotate on the spindle 233, the planet gear 2622 is self-rotated at a fixed position while the guiding pin 2612 is restricted in the straight slot 2631, and the planet gear 2622 is revolved about the sun gear 2621 while the guiding pin 2612 arrives at the curve slot 2632.

The angle adjusting mechanism 24 comprises a cam 241 and a lever 242. The cam 241 is disposed on the sleeve 261 and is capable of rotating together with the sleeve 261. One end of the lever 242 is fixed on the combiner 11 and the other end is a free end which is pushed by the cam 241 while the cam 241 rotates. When the cam 241 is rotated together with the sleeve 261, the cam 241 pushes the free end of the lever 242 to rotate the combiner 11 for adjusting the tilt angle of the combiner 11.

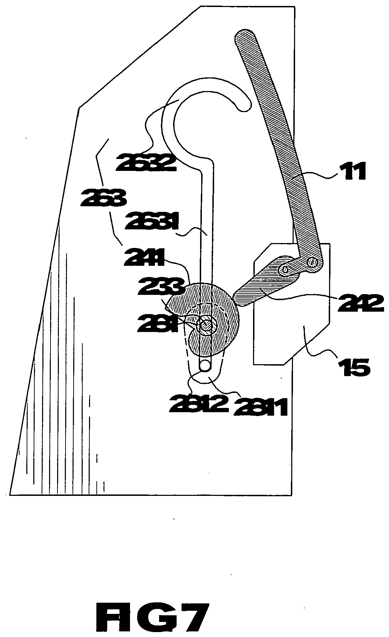

Please refer to FIG. 6 to 9. FIG. 7 to 9 are side cross-section views of the positioning system in FIG. 5 to respectively show that a combiner carrier is at a parking position, the combiner carrier is at an operating position, and the tilt angle of a combiner is adjusted.

The detailed description of the operation of the positioning system is described as follow.

Before starting to operate the positioning system 20, the combiner carrier 15 is positioned at the parking position, and the guiding pin 2612 is positioned at an end position of the straight slot 2631 as shown in FIG. 7.

When starting to operate the positioning system 20, the endless gear belt 17 is driven by the motor 18 and simultaneously drives the ring gear 2623 to rotate. At that time, as the rotation of the sleeve 261 is prohibited by the constraint between the guiding pin 2612 and the straight slot 2631, the planet gear 2622 is driven by the ring gear 2623 to self-rotate at a fixed position. Accordingly, the sun gear 2621 is driven by the planet gear 2622 to rotate, and the spindle 233 and the gear wheel 232 are simultaneously rotated. The rotation of the gear wheel 232 causes the relative movement of the gear wheel 232 on the rack 231 until the gear wheel 232 contacts the stopper 2312 and stops rotating because of the blocking of the stopper 2312.

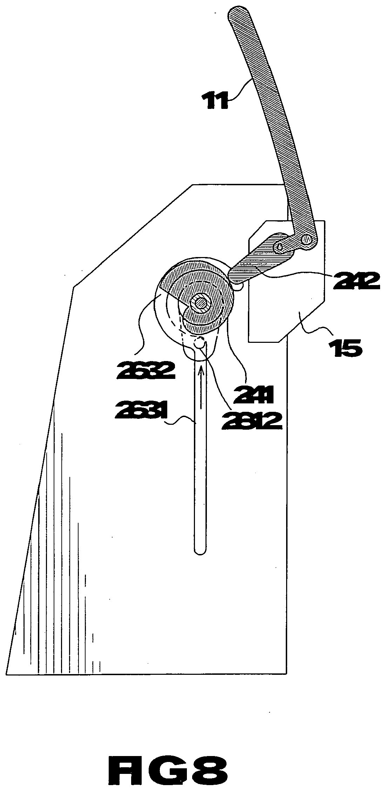

During above operation, the combiner carrier 15 is moved from the sparking position to the operating position, and the guiding pin 2612 is moved in the straight slot 2631 from the end position to a boundary position between the straight slot 2631 and the curve slot 2632 as shown in FIG. 8.

Now please refer to FIG. 8. When the combiner carrier 15 moves to the operating position, the further rotation of the sun gear 2621, the spindle 233 and the gear wheel 232 is blocked by the stopper 2312. At that time, the rotation of the sleeve 261 is released because the guiding pin 2612 can move in the curve slot 2632 with the rotation of the sleeve 261. Accordingly, when the motor 18 keeps driving the ring gear 2623, the planet gear 2622 is revolved about the sun gear 2621.

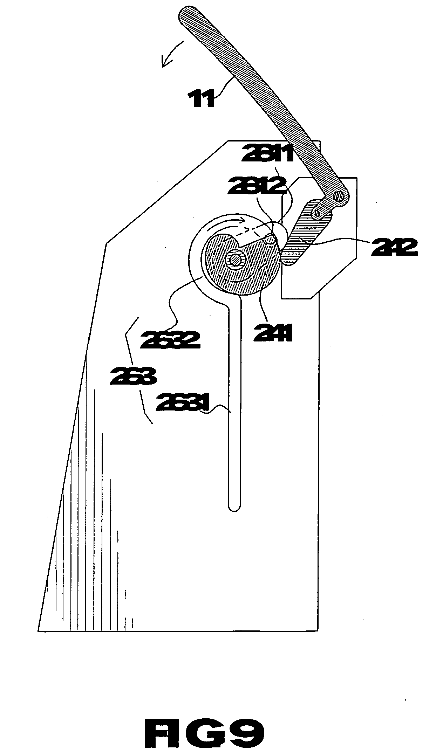

When the planet gear 2622 is revolved about the sun gear 2621, the sleeve 261 and the cam 241 are driven to rotate together, and the cam 241 will contact and push the lever 242 as shown in FIG. 9. Due to the varying radius of the cam 241, the cam 241 pushes the lever 242 at varying distance to rotate the combiner 11, thereby, it could control the tilt angle of the combiner 11 at a suitable view angle for a viewer.

And then, if a user intends to move the combiner carrier 15 back to the parking position, the entire process is reverse by reversing the motor 18. First, the sleeve 261 is driven to reversely rotate until the guiding pin 2612 moves back to the boundary position between the straight slot 2631 and the curve slot 2632 as shown in FIG. 8. Then, the further rotation of the sleeve 261 is prohibited so that the sun gear 2621 is driven to reversely rotate. Therefore, the gear wheel 232 is rotated and moved on the rack 231 to carry the combiner carrier 15 back to the parking position as shown in FIG. 7.

By the way, as the same with the first embodiment, for recovering the lever 242 to its un-pushed position after releasing the pushing force from the cam 241, an elastic member such as a spring (not shown in the Figures) is provided on the lever 242 for providing an elastic force against the pushing force from the cam 241.

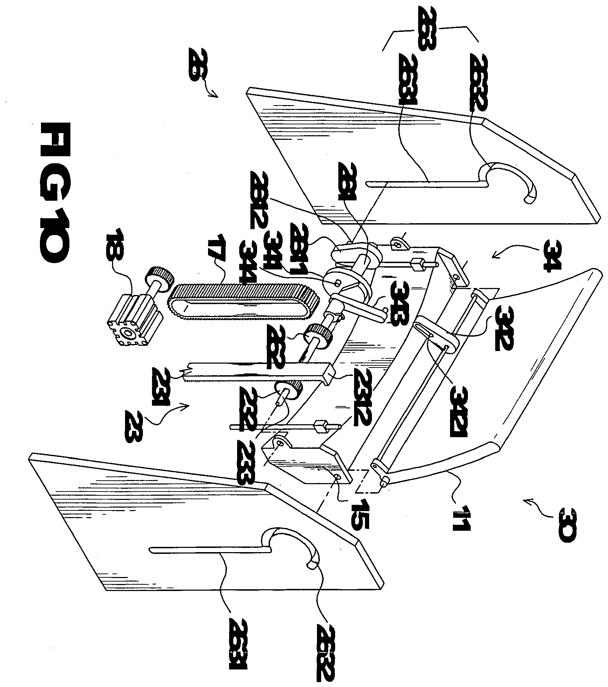

Next, please refer to FIG. 10, which illustrates a third embodiment of a positioning system 30 for a head-up display of the present invention. In this embodiment, an alternative angle adjusting mechanism 34 is provided. The other members are the same as those illustrated in the first embodiment and are numbered with the same number, and their detailed illustration is omitted here. This embodiment is based on the second embodiment for illustration; however, the alternative angle adjusting mechanism 34 also can be implemented on the first embodiment for replacing the adjusting mechanism 14.

In the third embodiment, the angle adjusting mechanism 34 comprises a curved face cam 341, a main lever 342, and a service lever 343. The curved face cam 341 is disposed on the sleeve 261 and capable of rotating with the rotation of the sleeve 261. One end of the main lever 342 is fixed on the combiner 11, and the other end of the main lever 342 is a free end. Moreover, the main lever 342 has a guiding slot 3421 disposed on it. One end of the service lever 343 is moveably connected with the guiding slot 3421, and the other end of the service lever 343 is rotatably disposed on the sleeve 261. The curved face cam 341 has a pin 344 for pushing the service lever 343.

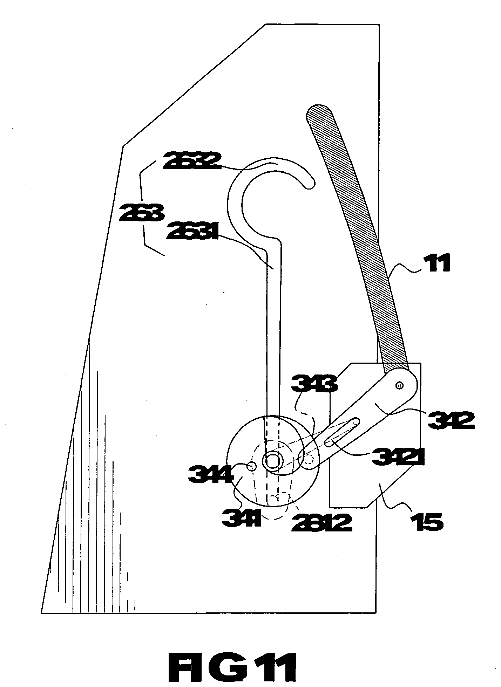

Please refer to FIG. 10 to 14. FIG. 11 to 14 are side cross-section views of the positioning system in FIG. 10 which respectively shows that a combiner carrier is at a parking position, the combiner carrier is at an operating position, the tilt angle of a combiner is adjusted, and the combiner is at a service position.

The operation of the moving mechanism 23 and the driving mechanism 26 according to the third embodiment are the same with the second embodiment.

Before starting to operate the positioning system 30, the combiner carrier 15 is positioned at the parking position, and the guiding pin 2612 is positioned at an end position of the straight slot 2631 as shown in FIG. 11.

When starting to operate the positioning system 20, the endless gear belt 17 is driven by the motor 18 and simultaneously drives the ring gear 2623 to rotate. At that time, as the rotation of the sleeve 261 is prohibited by the constraint between the guiding pin 2612 and the straight slot 2631, the planet gear 2622 is driven by the ring gear 2623 to self-rotate at a fixed position. Accordingly, the sun gear 2621 is driven by the planet gear 2622 to rotate, and the spindle 233 and the gear wheel 232 are simultaneously rotated. The rotation of the gear wheel 232 causes the relative movement of the gear wheel 232 on the rack 231 until the gear wheel 232 contacts the stopper 2312 and stops rotating because of the blocking of the stopper 2312.

During above operation, the combiner carrier 15 is moved from the sparking position to the operating position, and the guiding pin 2612 is moved in the straight slot 2631 from the end position to a boundary position between the straight slot 2631 and the curve slot 2632.

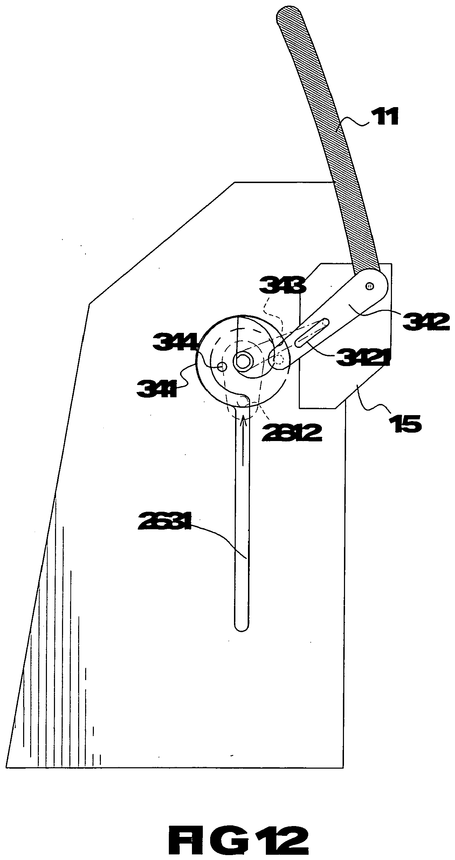

Please refer to FIG. 12. When the combiner carrier 15 moves to the operating position, the further rotation of the sun gear 2621, the spindle 233 and the gear wheel 232 is blocked by the stopper 2312. At that time, the rotation of the sleeve 261 is released because the guiding pin 2612 can move in the curve slot 2632 with the rotation of the sleeve 261. Accordingly, when the motor 18 keeps driving the ring gear 2623, the planet gear 2622 is revolved about the sun gear 2621.

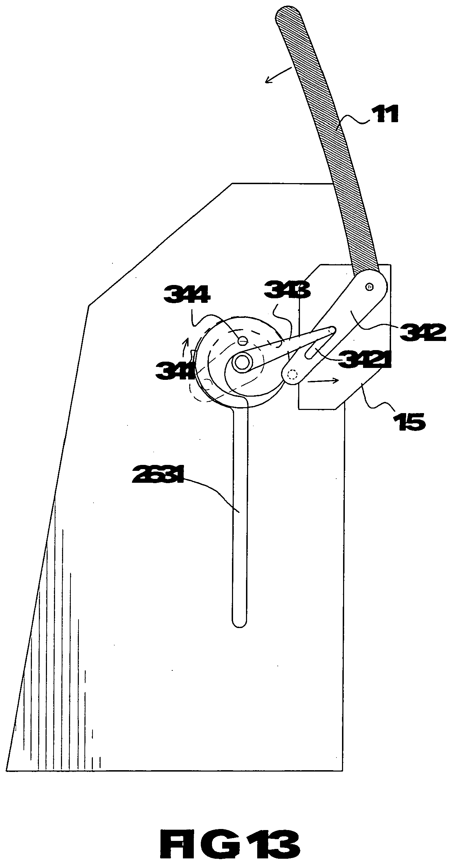

When the planet gear 2622 is revolved about the sun gear 2621, the sleeve 261 and the curved face cam 341 are driven to rotate together, and the curved face cam 341 will push and guide the main lever 342 to rotate the combiner 11 to fine adjust the tilt angle of the combiner 11 at a suitable view angle for a viewer as shown in FIG. 13.

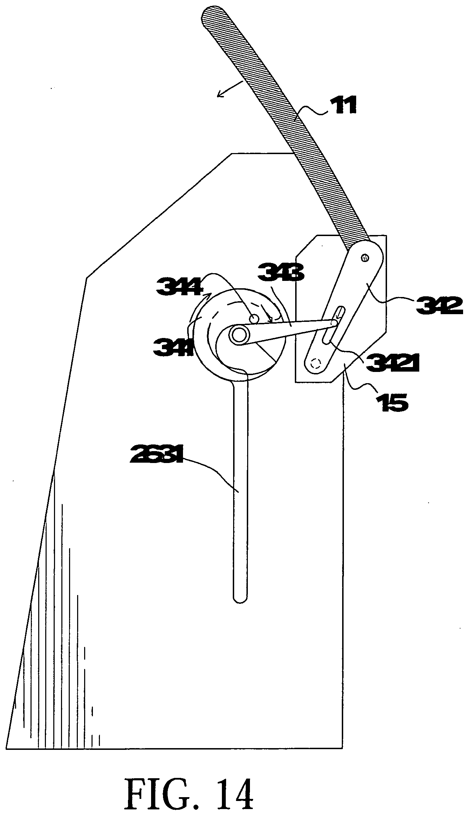

Besides, with the further rotation of the curved face cam 341, the pin 344 will press the service lever 343 to allow its one end moving in the guiding slot in the main lever and thus further push the main lever 342 to further rotate the tilt angle so that the combiner 11 is at a service position as shown in FIG. 14. At the service position, the combiner is far away from the windshield to have the possibility to clean the windshield behind the combiner.

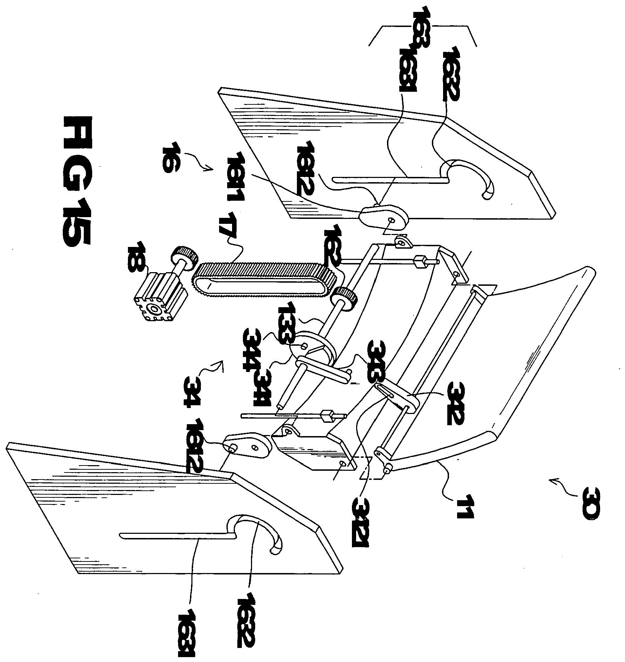

The alternative angle adjusting mechanism 34 also can be implemented on the first embodiment for replacing the adjusting mechanism 14 as shown in FIG. 15.

The angle adjusting mechanism 34 comprises a curved face cam 341, a main lever 342, and a service lever 343. The curved face cam 341 is disposed on the spindle 133 and capable of rotating with the rotation of the spindle 133. One end of the main lever 342 is fixed on the combiner 11, and the other end of the main lever 342 is a free end. Moreover, the main lever 342 has a guiding slot 3421 disposed on it. One end of the service lever 343 is moveably connected with the guiding slot 3421, and the other end of the service lever 343 is rotatably disposed on the spindle 133. The curved face cam 341 has a pin 344 for pushing the service lever 343.

The operation is the same as those illustrated in the first and the third embodiment, and the detailed description is omitted here.

According to the positioning system of the present invention, the moving mechanism and the angle adjusting mechanism are separate units, and the designs of them are flexible to change for fitting the requirements for dashboard and different windshields from car makers. Moreover, according to the driving mechanism provided in the present invention, the moving mechanism and the angle adjusting mechanism are alternatively driven without two their own driving mechanisms. Therefore, the size of the head-up display system is reduced.

While the present invention has been particularly shown and described with reference to exemplary embodiments thereof, it will be understood by those of ordinary skill in the art that various changes and modifications may be made therein without departing from the spirit and scope of the present invention as defined by the following claims.

## Claims

1. A positioning system (10) for a head-up display, which comprises:
a combiner carrier (15);
a combiner (11) rotatably disposed on the combiner carrier (15);
a moving mechanism (13) for moving the combiner carrier (15) from a first position being a parking position to a second position being an operating position, and comprising a spindle (133) rotatably disposed on the combiner carrier (15);
an angle adjusting mechanism (14) comprising a cam (141) connected to the spindle (133) and a lever (142), one end of which being connected to the spindle (133) and one end of which being free and being pushed by the cam (141) for rotating the combiner (11) relative to the combiner carrier (15) to adjust a tilt angle of the combiner (11); and
a driving mechanism (16) for alternatively driving the moving mechanism (13) and the angle adjusting mechanism (14) comprising a driving gear (162) connected to the spindle (133), a guiding plate (1611) connected to the spindle (133) and having a guiding pin (1612); and a guiding slot (163) for accommodating the guiding pin (1612) and having a straight slot (1631) and a curve slot (1632);
wherein the driving gear (162), the guiding plate (1611) and the cam (141) are connected to the spindle (133) and are rotated together with the spindle (133);
wherein when the guiding pin (1612) is in the straight slot (1631), the guiding plate (1611) is prohibited from rotating by the constraint between the guiding pin (1621) and the straight slot (1631), and the driving gear (162) drives the spindle (133) to move the combiner carrier (15) between the parking position and the operating position;
wherein, when the guiding pin (1612) is in the curve slot (1632), the guiding plate (1611) is allowed to rotate, and the driving gear (162) drives the cam (141) to rotate the combiner (11) relative to the combiner carrier (15) to adjust the tilt angle of the combiner (11).

2. A positioning system (20, 30) for a head-up display, which comprises:
a combiner carrier (15);
a combiner (11) rotatably disposed on the combiner carrier (15);
a moving mechanism (23) for moving the combiner carrier (15) from a parking position to an operating position;
an angle adjusting mechanism (24, 34) for adjusting a tilt angle of the combiner (11); and
a driving mechanism (26) for alternatively driving the moving mechanism (23) and the angle adjusting mechanism (24, 34);
the moving mechanism (23) comprising a spindle (233) rotatably disposed on the combiner carrier (15), and the driving mechanism (26) comprises a planetary gear train (262) having a sun gear (2621), a planet gear (2622) and a sleeve (261), wherein the planet gear (2622) is engaged with the sun gear (2621), the sun gear (2621) is disposed on the spindle (233), and the sleeve (261) is rotatably disposed on the spindle (233) and is connected to the planet gear (2622) and the angle adjusting mechanism (24, 34),
wherein, when the planet gear (2622) is rotated at a fixed position, the sun gear (2621) is driven to rotate by the planet gear (2622) so that the spindle (233) is rotated together with the sun gear (2621) to drive the moving mechanism (23) between the parking position and the operating position,
wherein, when the planet gear (2622) is revolved about the sun gear (2621), the sleeve (261) is driven to rotate by the planet gear (2622) to drive the angle adjusting mechanism (24, 34);
the driving mechanism (26) comprising:
a guiding pin (2612) connected to said sleeve (261), and
a guiding slot (263, 3421), for accommodating the guiding pin (2612) and having a straight slot (2631) and a curve slot (2632);
wherein, when the guiding pin (2612) is in the straight slot (2631), the planet gear (2622) is rotated at a fixed position and drives the sun gear (2621) to rotate,
wherein, wherein the guiding pin (2612) is in the curve slot (2632), the planet gear (2622) is revolved about the sun gear (2621), and the sun gear (2621) is prohibited to rotate;
the angle adjusting mechanism (24, 34) comprising:
a cam (241, 341) disposed on the sleeve (261) and capable of rotating with the sleeve (261); and
a lever (242, 342), wherein one end of which is fixed on the combiner (11) and the other end is a free end;
wherein, when the planet gear (2622) is revolved about the sun gear (2621), the sleeve (261) is driven to rotate by the planet gear (2622), and the cam (241, 341) is rotated together with the sleeve (261) and pushes the free end of the lever (242, 342), to adjust the tilt angle of the combiner (11).

3. The positioning system (20, 30) for the head-up display according to claim 2, wherein the driving mechanism (26) switches to drive the angle adjusting mechanism (24, 34) after it drives the moving mechanism (23) to carry the combiner carrier (15) to the operating position.

4. The positioning system (20, 30) for the head-up display according to claim 2 or 3, wherein
when the planet gear (2622) is rotated at a fixed position, the sun gear (2621) is driven to rotate by the planet gear (2622) to drive the moving mechanism (23),
wherein when the planet gear (2622) is revolved about the sun gear (2621), the angle adjusting mechanism (24, 34) is driven by the planet gear (2622).

5. The positioning system (20, 30) for the head-up display according to any one of the claims 2 to 4, wherein the planetary gear train (262) further comprises a ring gear (2623), the planet gear (2622) is engaged between the sun gear (2621) and the ring gear (2623), and the ring gear (2623) is the driving source of the planetary gear train (262).

6. The positioning system (20, 30) for the head-up display according to claim 5, wherein the ring gear (2623) is driven by a belt gear.

7. The positioning system (20, 30) for a head-up display according to any one of the claims 2 to 6 , wherein the angle adjusting mechanism (24, 34) further comprises:
a service lever (343), wherein one end of which is movably connected to the lever (242, 342), and the other end is rotatably disposed on the sleeve (261); and a pin (344), provided on the cam (241, 341), wherein, when the cam (241, 341) is further rotated together with the sleeve (261), the pin (344) pushes the service lever (343) to further adjust the tilt angle of the combiner (11).

8. The positioning system (20, 30) for the head-up display according to any one of claims 2 to 7, wherein the moving mechanism (23) comprises:
a rack (231), having a stopper (2312) at its one end; and
a gear wheel (232) disposed on the spindle (233) and engaged with the rack (231); wherein, when the spindle (233) is driven to rotate, the gear wheel (232) is rotated together and relatively moves on the rack (231) for moving the combiner carrier (15).

## Patentansprüche

1. Positionierungssystem (10) für eine Frontscheibenanzeige, welches aufweist:
einen Kombinatorträger (15),
einen Kombinator (11), der drehbar auf dem Kombinatorträger (15) angeordnet ist,
einen Bewegungsmechanismus (13), um den Kombinatorträger (15) von einer ersten Position, die eine Parkposition ist, auf eine zweite Position, die eine Arbeitsposition ist, zu bewegen und der eine Spindel (133) aufweist, die drehbar auf dem Kombinatorträger (15) angeordnet ist,
ein Winkeleinstellmechanismus (14), der einen Nocken (141), der mit der Spindel (133) verbunden ist, und einen Hebel (142) aufweist, von dem ein Ende mit der Spindel (133) verbunden ist und dessen eines Ende frei ist und durch das es durch den Nocken (141) geschoben wird, um den Kombinator (11) in Bezug zu dem Kombinatorträger (15) zu drehen, um einen Neigungswinkel des Kombinators (11) einzustellen, und
einen Antriebsmechanismus (16), um den Bewegungsmechanismus (13) und den Winkeleinstellmechanismus (14) wechselseitig anzutreiben, der ein mit der Spindel (133) verbundenes Antriebszahnrad (162), eine Führungsplatte (1611), die mit der Spindel (133) verbunden ist und die einen Führungsstift (1612) aufweist, und einen Führungsschlitz (163) zum Aufnehmen des Führungsstiftes (1612) und einen geraden Schlitz (1631) und einen Kurvenschlitz (1632) aufweist,
wobei das Antriebszahnrad (162), die Führungsplatte (1611) und der Nocken (141) mit der Spindel (133) verbunden sind und zusammen mit der Spindel (133) gedreht werden,
wobei, wenn sich der Führungsstift (1612) in dem geraden Schlitz (1631) befindet, die Führungsplatte (1611) an dem Drehen durch den Zwang zwischen dem Führungsstift (1621) und dem geraden Schlitz (1631) gehindert wird, und das Antriebszahnrad (162) die Spindel (133) antreibt, um den Kombinatorträger (15) zwischen der Parkposition und der Arbeitsposition zu bewegen,
wobei, wenn der Führungsstift (1612) sich in dem Kurvenschlitz (1632) befindet, die Führungsplatte (1611) sich drehen kann und das Antriebszahnrad (162) den Nocken (141) antreibt, um den Kombinator (11) in Bezug zu dem Kombinatorträger (15) zu drehen, um den Neigungswinkel des Kombinators (11) einzustellen.

2. Positionierungssystem (20, 30) für eine Frontscheibenanzeige, welches aufweist:
ein Kombinatorträger (15),
einen Kombinator (11), der drehbar auf dem Kombinatorträger (15) angeordnet ist,
einen Bewegungsmechanismus (23), um den Kombinatorträger (15) von einer Parkposition in eine Arbeitsposition zu bewegen,
einen Winkeleinstellmechanismus (24, 34) zum Einstellen eines Neigungswinkels des Kombinators (11) und
einen Antriebsmechanismus (26), um den Bewegungsmechanismus (23) und des Winkeleinstellmechanismus (24, 34) wechselseitig anzutreiben,
wobei der Bewegungsmechanismus (23) eine Spindel (233) aufweist, die drehbar auf dem Kombinatorträger (15) angeordnet ist, und wobei der Antriebsmechanismus (26) einen Planetengetriebezug (262) mit einem Sonnenrad (2621), einem Planetenrad (2622) und einer Hülse (261) aufweist, wobei das Planetenrad (2622) mit dem Sonnenrad (2621) in Eingriff steht, wobei das Sonnenrad (2621) an der Spindel (233) angeordnet ist und wobei die Hülse (261) drehbar an der Spindel (233) angeordnet ist und sie mit dem Planetenrad (2622) und dem Winkeleinstellmechanismus (24, 34) verbunden ist,
wobei, wenn das Planetenrad (2622) an einer festen Position gedreht wird, das Sonnenrad (2621) so angetrieben wird, dass es sich durch das Planetenrad (2622) dreht, so dass die Spindel (233) zusammen mit dem Sonnenrad (2621) gedreht wird, um den Bewegungsmechanismus (23) zwischen der Parkposition und der Arbeitsposition anzutreiben,
wobei, wenn das Planetenrad (2622) um das Sonnenrad (2621) gedreht wird, die Hülse (261) angetrieben wird, um sich durch das Planetenrad (2622) zu drehen, um den Winkeleinstellmechanismus (24, 34) anzutreiben,
wobei der Antriebsmechanismus (26) aufweist:
einen Führungsstift (2612), der mit der Hülse (261) verbunden ist, und
einen Führungsschlitz (263, 3421) zum Aufnehmen des Führungsstiftes (2612) und mit einem geraden Schlitz (2631) und einem Kurvenschlitz (2632);
wobei, wenn der Führungsstift (2612) sich in dem geraden Schlitz (2631) befindet, das Planetenrad (2622) in einer festen Position gedreht wird und das Sonnenrad (2621) antreibt, um sich zu drehen,
wobei, wenn der Führungsstift (2612) sich in dem Kurvenschlitz (2632) befindet, das Planetenrad (2622) um das Sonnenrad, (2621) gedreht wird und das Sonnenrad (2621) sich nicht dreht;
wobei der Winkeleinstellmechanismus (24, 34) aufweist:
einen Nocken (241, 341), der auf der Hülse (261) angeordnet ist und der sich mit der Hülse (261) drehen kann, und
einen Hebel (242, 342), von dem ein Ende an dem Kombinator (11) befestigt ist und das andere Ende ein freies Ende ist,
wobei, wenn das Planetenrad (2622) um das Sonnenrad (2621) gedreht wird, die Hülse (261) angetrieben wird, um sich durch das Planetenrad (2622) zu drehen, und der Nocken (241, 341) zusammen mit der Hülse gedreht wird (261) und auf das freie Ende des Hebels (242, 342) drückt, um den Neigungswinkel des Kombinators (11) einzustellen.

3. Positionierungssystem (20, 30) für die Frontscheibenanzeige nach Anspruch 2, wobei der Antriebsmechanismus (26) umschaltet, um den Winkeleinstellmechanismus (24, 34) anzutreiben, nachdem er den Bewegungsmechanismus (23) angetrieben hat, den Kombinatorträger (15) in die Arbeitsposition zu bringen.

4. Positionierungssystem (20, 30) für die Frontscheibenanzeige nach Anspruch 2 oder 3, wobei
wenn das Planetenrad (2622) an einer festen Position gedreht, das Sonnenrad (2621) angetrieben wird, um sich durch das Planetenrad (2622) zu drehen, um den Bewegungsmechanismus (23) anzutreiben,
wobei, wenn das Planetenrad (2622) um das Sonnenrad (2621) gedreht wird, der Winkeleinstellmechanismus (24, 34) durch das Planetenrad (2622) angetrieben wird.

5. Positionierungssystem (20, 30) für die Frontscheibenanzeige nach einem der Ansprüche 2 bis 4, wobei der Planetengetriebezug (262) ferner ein Hohlrad (2623) aufweist, wobei das Planetenrad (2622) zwischen dem Sonnenrad (2621) und dem Hohlrad (2623) in Eingriff ist, und wobei das Hohlrad (2623) die Antriebsquelle des Planetengetriebezuges (262) ist.

6. Positionierungssystem (20, 30) für die Frontscheibenanzeige nach Anspruch 5, wobei das Hohlrad (2623) von einem Riemenrad angetrieben wird.

7. Positionierungssystem (20, 30) für die Frontscheibenanzeige nach einem der Ansprüche 2 bis 6, wobei der Winkeleinstellmechanismus (24, 34) ferner aufweist:
einen Bedienungshebel (343), von dem ein Ende beweglich mit dem Hebel (242, 342) verbunden ist und das andere Ende drehbar an der Hülse (261) angeordnet ist, und
einen Stift (344), der an dem Nocken (241, 341) vorgesehen ist, wobei, wenn der Nocken (241, 341) zusammen mit der Hülse (261) weitergedreht wird, der Stift (344) den Bedienungshebel (343) drückt, um den Neigungswinkel des Kombinators (11) weiter einstellen.

8. Positionierungssystem (20, 30) für die Frontscheibenanzeige nach einem der Ansprüche 2 bis 7, wobei der Bewegungsmechanismus (23) aufweist:
eine Zahnstange (231), die einen Anschlag (2312) an ihrem einen Ende aufweist, und
ein Zahnrad (232), das an der Spindel (233) angeordnet ist und das mit der Zahnstange (231) in Eingriff steht, wobei, wenn die Spindel (233) angetrieben wird, sich zu drehen, das Zahnrad (232) zusammen gedreht wird und sich in Bezug auf die Zahnstange (231) bewegt, um den Kombinatorträger (15) zu bewegen.

## Revendications

1. Système de positionnement (10) pour un affichage tête haute, qui comprend :
un support de combinateur (15) ;
un combinateur (11) disposé de manière rotative sur le support de combinateur (15) ;
un mécanisme de déplacement (13) pour déplacer le support de combinateur (15) d'une première position qui est une position de stationnement jusqu'à une deuxième position qui est une position de fonctionnement, et comprenant une broche (133) disposée de manière rotative sur le support de combinateur (15) ;
un mécanisme d'ajustement d'angle (14) comprenant une came (141) reliée à la broche (133) et un levier (142), dont une extrémité est reliée à la broche (133) et dont une extrémité est libre et poussée par la came (141) pour mettre en rotation le combinateur (11) par rapport au support de combinateur (15) pour ajuster un angle d'inclinaison du combinateur (11) ; et
un mécanisme d'entraînement (16) pour entraîner en va-et-vient le mécanisme de déplacement (13) et le mécanisme d'ajustement d'angle (14) comprenant un engrenage d'entraînement (162) relié à la broche (133), une plaque de guidage (1611) reliée à la broche (133) et ayant une tige de guidage (1612) ; et une fente de guidage (163) pour accueillir la tige de guidage (1612) et ayant une fente droite (1631) et une fente incurvée (1632) ;
dans lequel l'engrenage d'entraînement (162), la plaque de guidage (1611) et la came (141) sont reliés à la broche (133) et sont mis en rotation avec la broche (133) ;
dans lequel, quand la tige de guidage (1612) est dans la fente droite (1631), la rotation de la plaque de guidage (1611) est empêchée par la contrainte entre la tige de guidage (1612) et la fente droite (1631), et l'engrenage d'engrenage (162) entraîne la broche (133) pour déplacer le support de combinateur (15) entre la position de stationnement et la position de fonctionnement ;
dans lequel, quand la tige de guidage (1612) est dans la courbe incurvée (1632), la plaque de guidage (1611) est autorisée à être mise en rotation, et l'engrenage d'entraînement (162) entraîne la came (141) pour mettre en rotation le combinateur (11) par rapport au support de combinateur (15) afin d'ajuster l'angle d'inclinaison du combinateur (11).

2. Système de positionnement (20, 30) pour un affichage tête haute, qui comprend :
un support de combinateur (15) ;
un combinateur (11) disposé de manière rotative sur le support de combinateur (15) ;
un mécanisme de déplacement (23) pour déplacer le support de combinateur (15) d'une position de stationnement jusqu'à une position de fonctionnement ;
un mécanisme d'ajustement d'angle (24, 34) pour ajuster un angle d'inclinaison du combinateur (11) ; et
un mécanisme d'entraînement (26) pour entraîner en va-et-vient le mécanisme de déplacement (23) et le mécanisme d'ajustement d'angle (24, 34) :
le mécanisme de déplacement (23) comprenant une broche (233) disposée de manière rotative sur le support de combinateur (15), et le mécanisme d'entraînement (26) comprend un train épicycloïdal (262) ayant un planétaire (2621), un satellite (2622) et un manchon (261), dans lequel le satellite (2622) est en prise avec le planétaire (2621), le planétaire (2621) est disposé sur la broche (233), et le manchon (261) est disposé de manière rotative sur la broche (233) et est relié au satellite (2622) et au mécanisme d'ajustement d'angle (24, 34),
dans lequel, quand le satellite (2622) est mis en rotation dans une position fixe, le planétaire (2621) est entraîné pour mettre en rotation le satellite (2622) de telle sorte que la broche (233) est mise en rotation avec le planétaire (2621) pour entraîner le mécanisme de déplacement (23) entre la position de stationnement et la position de fonctionnement,
dans lequel, quand le satellite (2622) tourne autour du planétaire (2621), le manchon (261) est entraîné pour être mis en rotation par le satellite (2622) afin d'entraîner le mécanisme d'ajustement d'angle (24, 34) ;
le mécanisme d'entraînement (26) comprenant :
une tige de guidage (2612) reliée audit manchon (261), et
une fente de guidage (263, 3421), pour accueillir la tige de guidage (2612) et ayant une fente droite (2631) et une fente incurvée (2632) ;
dans lequel, quand la tige de guidage (2612) est dans la fente droite (2631), le satellite (2622) est mis en rotation dans une position fixe et entraîne le planétaire (2621) en rotation,
dans lequel, quand la tige de guidage (2612) est dans la fente incurvée (2632), le satellite (2622) tourne autour du planétaire (2621), et la rotation du planétaire (2621) est empêchée ;
le mécanisme d'ajustement d'angle (24, 34) comprenant :
une came (241, 341) disposée sur le manchon (261) et capable d'être mise en rotation avec le manchon (261) ; et
un levier (242, 342), dont une extrémité est fixée sur le combinateur (11) et l'autre extrémité est une extrémité libre ;
dans lequel, quand le satellite (2622) tourne autour du planétaire (2621), le manchon (261) est entraîné pour être mis en rotation par le satellite (2622), et la came (242, 341) est mise en rotation avec le manchon (261) et pousse l'extrémité libre du levier (242, 342) pour ajuster l'angle d'inclinaison du combinateur (11).

3. Système de positionnement (20, 30) pour l'affichage tête haute selon la revendication 2, dans lequel le mécanisme d'entraînement (26) commute pour entraîner le mécanisme d'ajustement d'angle (24, 34) après qu'il a entraîné le mécanisme de déplacement (23) pour transporter le support de combinateur (15) jusqu'à la position de fonctionnement.

4. Système de positionnement (20, 30) pour l'affichage tête haute selon la revendication 2 ou 3, dans lequel
quand le satellite (2622) est mis en rotation dans une position fixe, le planétaire (2621) est entraîné en rotation par le satellite (2622) pour entraîner le mécanisme de déplacement (23),
dans lequel, quand le satellite (2622) tourne autour du planétaire (2621), le mécanisme d'ajustement d'angle (24, 34) est entraîné par le satellite (2622).

5. Système de positionnement (20, 30) pour l'affichage tête haute selon l'une quelconque des revendications 2 à 4, dans lequel le train épicycloïdal (262) comprend en outre une couronne dentée (2623), le satellite (2622) est mis en prise entre le planétaire (2621) et la couronne dentée (2623), et la couronne dentée (2623) est la source d'entraînement du train épicycloïdal (262).

6. Système de positionnement (20, 30) pour l'affichage tête haute selon la revendication 5, dans lequel la couronne dentée (2623) est entraînée par un engrenage à courroie.

7. Système de positionnement (20, 30) pour un affichage tête haute selon l'une quelconque des revendications 2 à 6, dans lequel le mécanisme d'ajustement d'angle (24, 34) comprend en outre :
un levier de service (343), dont une extrémité est reliée de manière mobile au levier (242, 342), et l'autre extrémité est disposée de manière rotative sur le manchon (261) ; et une tige (344), située sur la came (241, 341), dans lequel, quand la came (241, 341) est encore mise en rotation avec le manchon (261), la tige (344) pousse le levier de service (343) pour ajuster encore l'angle d'inclinaison du combinateur (11).

8. Système de positionnement (20, 30) pour l'affichage tête haute selon l'une quelconque des revendications 2 à 7, dans lequel le mécanisme de déplacement (23) comprend :
une crémaillère (231), ayant une butée (2312) au niveau de sa une extrémité ; et
une roue d'engrenage (232) disposée sur la broche (233) et en prise avec la crémaillère (231) ; dans lequel, quand la broche (233) est entraînée en rotation, la roue d'engrenage (232) est mise en rotation avec et se déplace de manière relative sur la crémaillère (231) pour déplacer le support de combinateur (15).
